**Europäisches Patentamt**

**European Patent Office**

**Office européen des brevets**

(19)

(11) Veröffentlichungsnummer: **0 299 132 B1**

(12) **EUROPÄISCHE PATENTSCHRIFT**

(45) Veröffentlichungstag der Patentschrift:
**27.12.90**

(51) Int. Cl.⁵: **F02M 25/02, F02M 31/12**

(21) Anmeldenummer: **87890172.7**

(22) Anmeldetag: **13.07.87**

(54) **Einrichtung zur Verdampfung einer Kraftstoff-Wasseremulsion für Brennkraftmaschine.**

(43) Veröffentlichungstag der Anmeldung:
**18.01.89 Patentblatt 89/3**

(45) Bekanntmachung des Hinweises auf die Patenterteilung:
**27.12.90 Patentblatt 90/52**

(84) Benannte Vertragsstaaten:
**BE CH DE FR GB IT LI NL**

(56) Entgegenhaltungen:
**DE-A- 3 527 380
FR-A- 977 788
FR-A- 2 194 885
US-A- 4 092 963
US-A- 4 375 799
US-A- 4 378 001**

**PATENT ABSTRACTS OF JAPAN, Band 7,
Nr. 133 (M-221)[1278], 10. Juni 1983; &
JP-A-58 48 773 (TOYOTA JIDOSHA KOGYO
K.K.) 22-03-1983**

(73) Patentinhaber: **Auer, Gerhard, Ulmgasse 14/D,
A-8053 Graz(AT)**

(72) Erfinder: **Auer, Gerhard, Ulmgasse 14/D,
A-8053 Graz(AT)**

## Beschreibung

Die Erfindung betrifft eine Einrichtung zur Verdampfung von Kraftstoff bei einer gemischverdichtenden, fremdgezündeten Brennkraftmaschine, mit einer elektrischen Heizvorrichtung die einen Teil der Innenwand der Luftansaugleitung der Brennkraftmaschine bildet und einen elektrischen Heizwiderstand aufweist, der durch einen Temperaturfühler und ein Steuergerät regelbar ist, und mit einem Einspritzventil zur Einspritzung des Kraftstoffes in die Luftansaugleitung im Einlasskanal unmittelbar vor dem Einlassventil, wobei der aus dem Einspritzventil austretende Strahl auf die Heizvorrichtung auftrifft, wodurch der Kraftstoff verdampft wird.

Eine derartige Einrichtung ist aus der JP-A 5 848 773 (Zusammenfassung) bekannt, bei der nur Kraftstoff eingespritzt wird.

Eine ähnliche Einrichtung zeigt die US-A 4 378 001. Hier wird der Kraftstoff jedoch nicht unmittelbar vor dem Einlassventil eingespritzt.

Aus US-A 4 375 799 ist es bekannt Alkoholkraftstoff bei der Einspritzung in das Ansaugrohr, mit Hilfe einer elektrischen Heizvorrichtung, zu verdampfen.

Bei der Erfindung kann man eine Wasser-Kraftstoffemulsion einspritzen, die in der Luftansaugleitung durch eine Heizvorrichtung verdampft wird.

Aus der FR-A 977 788 ist es bekannt einen Motor mit einem Gemisch von Kraftstoff und mehr als 50 % Wasser zu betreiben. Die Kraftstoff-Wasser-Emulsion wird hier in einem gesonderten Verdampfer verdampft.

Aufgabe dieser Erfindung ist es eine Vorrichtung herzustellen mit der man die Zuführung eines Wasserdampf-Kraftstoff- dampfgemisches zu einem herkömmlichen Motor ermöglichen kann. Somit ist ein umweltfreundlicher Motorbetrieb gewährleistet. Diese Aufgabe wird erfindungsgemäss dadurch gelöst, dass im Kraftstoffsystem eine Emulsionsvorrichtung vorgesehen ist, in welcher der Kraftstoff mit mehr als 50 % Wasser eine Emulsion bildet, die durch das Einspritzventil in die Luftansaugleitung eingespritzt wird und durch die Heizvorrichtung verdampft wird, wobei das Steuergerät die Heizvorrichtung auf eine Temperatur zwischen 180° C regelt, und dass die Heizvorrichtung eine Keramikteil oder ein Chromnickel-Stahlteil umfasst in das der elektrische Heizwiderstand eingelassen ist.

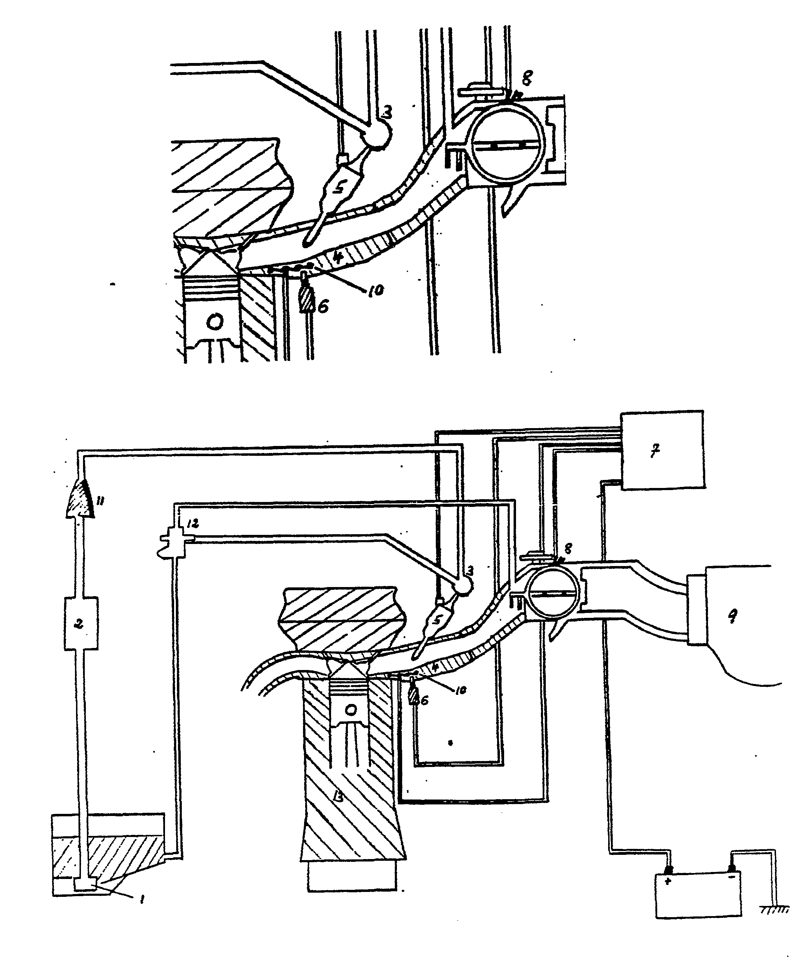

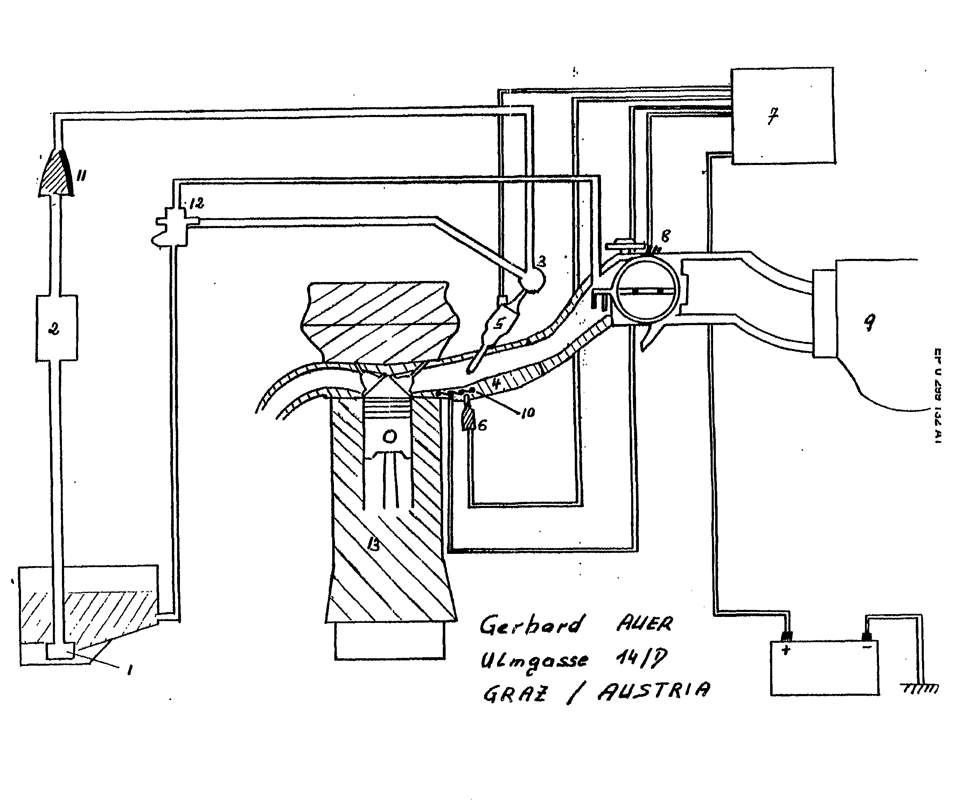

In der Zeichnung ist eine Ausführungsform der Erfindung dargestellt. Im Tank ist eine Mischanlage (Emulsionsgerät) 1 eingebaut um den Kraftstoff zu vermengen und aufzuwirbeln.

Die Treibstoffzufuhr erfolgt durch eine Kraftstoffpumpe 2 die den Kraftstoff zu dem Kraftstoffverteiler 3 befördert. Das Kraftstoffgemisch wird mittels Einspritzventil 5 eingespritzt. Durch die Heizvorrichtung 4 in der Luftansaugleitung wird das Kraftstoffgemisch verdampft gelangt nun in die Brennkammer und wird nun durch eine Hochleistungszündkerze mit einem starken Funken gezündet.

Die Einrichtung wird vorgeheizt und durch den Temperaturfühler 6 bei erreichen einer Temperatur von 180–200 Grad Celsius geregelt und kontrolliert. Durch das Steuergerät 7 an das ein Luftmengenmesser 9 angeschlossen ist, werden die Luftzufuhr mittels der Drosselklappe 8 sowie die Gemisch-Einspritzung geregelt. Mit 11 ist ein Kraftstofffilter, mit 12 ein Druckregler mit 13 der Motorblock bezeichnet.

Die Einrichtung besteht aus Keramik oder Chromnickelstahl in der der elektrische Heizwiderstand (Heizdioden) 10 angebracht ist, oder aus Metall mit Keramikbeschichtung in der wiederum der elektrische Heizwiderstand 10 angebracht ist.

Zur Verwendung können folgende Gemischbestandteile kommen. Destilliertes Wasser, Methanol, Spiritus, Isopropanol, Glyzerol, Athylengykol und Benzin Super.

## Patentansprüche

1. Einrichtung zur Verdampfung von Kraftstoff bei einer gemischverdichtenden, fremdgezünden Brennkraftmaschine, mit einer elektrischen Heizvorrichtung (4), die einen Teil der Innenwand der Luftansaugleitung der Brennkraftmaschine bildet und einen elektrischen Heizwiderstand (10) aufweist, der durch einen Temperaturfühler (6) und ein Steuergerät (7) regelbar ist, und mit einem Einspritzventil (5) zur Einspritzung des Kraftstoffes in die Luftansaugleitung im Einlasskanal unmittelbar vor dem Einlassventil, wobei der aus dem Einspritzventil (5) austretende Strahl auf die Heizvorrichtung auftrifft, wodurch der Kraftstoff verdampft wird, dadurch gekennzeichnet, dass im Kraftstoffsystem eine Emulsionsvorrichtung (1) vorgesehen ist in welcher der Kraftstoff mit mehr als 50 % Wasser eine Emulsion bildet, die durch das Einspritzventil (5) in die Luftansaugleitung eingespritzt wird und durch die Heizvorrichtung (4) verdampft wird, wobei das Steuergerät (7) die Heizvorrichtung (4) auf eine Temperatur zwischen 180° und 200° regelt und dass die Heizvorrichtung (4) ein Keramikteil oder ein Chromnickel-Stahlteil umfasst in das der elektrische Heizwiderstand (10) eingelassen ist.

2. Einrichtung nach Anspruch 1, dadurch gelennzeichnet, dass die Heizvorrichtung (4) ein Metallgehäuse mit Innenbeschichtung aus Keramik umfasst, in dem der elektrische Heizwiderstand (10) angebracht ist.

## Claims

1. Device for the evaporization of fuel in the case of a mixture compressing internal combustion engine with applied ignition, with an electric heating appliance (4), which constitutes a fraction of the inside wall of the air intake duct of the internal combustion engine and which exhibits an electric heating resistor (10), which can be governed by means of a temperature sensor (6) and a control unit (7), and with an injection valve (5) for injection of the fuel into the air intake duct in the intake port directly ahead of the intake valve, in the course of which the jet leaving the injection valve hits the heating appliance, by means of which the fuel is evaporated, characterized in that in the fuel system an emulsion appliance (1) is provided for, in which the fuel with more than 50% water forms an emulsion, which is injected through the injection valve (5) into the air intake duct and is evaporated by the heating appliance (4), during which the control unit (7) adjusts the heating appliance (4) to a temperature between 180–200°C, and characterized in that the heating appliance (4) comprises a ceramic part or a chrome-nickel steel part, into which the electric heating resistor (10) is sinked.

2. Device as claimed in claim 1, characterized in that the heating appliance (4) comprises a metal case with ceramic inside coating, in which the electric heating resistor (10) is placed.

**Revendications**

1. Installation d'évaporation de carburant pour une machine motrice à carburant avec compression et allumage extérieur avec un système de chauffage électrique (4) qui constitue une partie de la paroi extérieure du tuyau d'aspiration d'air et qui contient une résistance électrique de chauffage (10) laquelle est réglée par une sonde de température (6) et par un mécanisme de commande (7) et avec une soupape d'injection (5) pour l'injection du carburant dans le tuyau d'aspiration d'air en direction du canal d'admission juste avant la soupape d'admissoin – le jet sortant de la soupape d'injection arrive sur le système de chauffage, ce qui permet l'évaporation du carburant, caractérisée par une installation à émulsion (1) dans le système du carburant, installation dans laquelle le carburant constitue une émulsion avec plus de 50% d'eau, émulsion qui est injectée par la soupape d'injection (5) dans le tuyau d'aspiration d'air et évaporée au moyen du système de chauffage (4) – ici le mécanisme de commande (7) règle le système de chauffage (4) sur une température comprise entre 180° et 200°C et caractérisée par le fait que le système de chauffage (4) comprend une partie en céramique ou en acier nickel-chrome dans laquelle est emboîtée la résistance électrique de chauffage (10).

2. Installation correspondant à celle décrite dans la revendication (1), caractérisée par le fait que le système de chauffage (4) comprend un boîtier métallique avec revêtement intérieur en céramique dans lequel est emboîtée la résistance électrique de chauffage (10).